(19) Europäisches Patentamt
European Patent Office
Office européen des brevets

(11) EP 3 922 661 A1

(12) # EUROPÄISCHE PATENTANMELDUNG

(43) Veröffentlichungstag:
**15.12.2021 Patentblatt 2021/50**

(21) Anmeldenummer: **20179673.7**

(22) Anmeldetag: **12.06.2020**

(51) Int Cl.:
***C08G 65/26*** *(2006.01)* ***C08G 18/56*** *(2006.01)*
***C08G 2/00*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **VERFAHREN ZUR HERSTELLUNG VON POLYOXYMETHYLEN-POLYOXYALKYLEN-COPOLYMEREN**

(57) Die vorliegende Erfindung beschreibt ein Verfahren zur Herstellung eines Polyoxymethylen-Polyoxyalkylen-Copolymers umfassend der Reaktion einer polymeren Formaldehydverbindung eines Alkylenoxid und einer spezifischen Komponente (X) in Gegenwart eines Doppelmetallcyanid (DMC)-Katalysators. Sie betrifft weiterhin durch ein solches Verfahren erhältliches Polyoxymethylen-Polyoxyalkylen-Copolymer sowie dessen Verwendung zur Herstellung eines Polyurethan-Polymers.

EP 3 922 661 A1

## Beschreibung

Die vorliegende Erfindung beschreibt ein Verfahren zur Herstellung eines Polyoxymethylen-Polyoxyalkylen-Copolymers umfassend der Reaktion einer polymeren Formaldehydverbindung eines Alkylenoxid und einer spezifischen Komponente (X) in Gegenwart eines Doppelmetallcyanid (DMC)-Katalysators. Sie betrifft weiterhin durch ein solches Verfahren erhältliches Polyoxymethylen-Polyoxyalkylen-Copolymer sowie dessen Verwendung zur Herstellung eines Polyurethan-Polymers.

WO2015/155094 A1 offenbart ein Verfahren zur Herstellung von Polyoxymethylen-Blockcopolymeren, umfassend den Schritt der Aktivierung des DMC-Katalysators in Anwesenheit einer OH-terminierten polymeren Formaldehydverbindung mit einer definierten Menge Alkylenoxid, sowie einer optional anschließenden Polymerisation mit Alkylenoxiden, welche ggf. in Anwesenheit von weiteren Comonomeren stattfindet. Hierbei wird in einem ersten Schritt der DMC-Katalysator in Gegenwart der polymeren Formaldehyd-Starterverbindung aktiviert, wobei zur Aktivierung des DMC-Katalysators eine Teilmenge (bezogen auf die Gesamtmenge der bei der Aktivierung und Polymerisation eingesetzten Menge an Alkylenoxiden) von einem oder mehreren Alkylenoxiden zugesetzt wird und in einem zweiten Schritt ein oder mehrere Alkylenoxide sowie gegebenenfalls Kohlenstoffdioxid zu der aus Schritt (i) resultierenden Mischung zugesetzt werden. Dabei erfolgt die Aktivierung des DMC-Katalysators im ersten Schritt (i) bei einer Aktivierungstemperatur ($T_{akt}$) von 20 bis 120 °C. Die Funktionalität der resultierenden Polyoxymethylen-Blockcopolymere ist hierbei auf die Funktionalität der eingesetzten polymeren Formaldehyd-Starterverbindung von zwei beschränkt.

In PCT/EP2019/081407 wird ein Verfahren zur Herstellung von Polyoxymethylen-Polyalkylenoxid-Blockcopolymeren offenbart, umfassend den Schritt der Polymerisation eines Alkylenoxids in Gegenwart eines OH-terminierten Polyoxymethylen-Polymers als polymere Formaldehydstarterverbindung und eines Katalysators, wobei das Polyoxymethylen-Polymer ein zahlenmittleres Molekulargewicht Mn, von ≥ 1100 g/mol bis ≤ 2300 g/mol aufweist.. Die Funktionalität der resultierenden Polyoxymethylen-Blockcopolymere ist hierbei ebenfalls auf die Funktionalität der eingesetzten längerkettigen OH-terminierten Polyoxymethylen-Starterverbindung von zwei beschränkt. Weiterhin weisen die Polyoxymethylen-Polyalkylenoxid-Blockcopolymere Molmassen von mehr als 6700 g/mol auf, welche für zahlreiche Anwendungen dieser difunktionellen Hydroxylgruppen-terminierten Copolymere mit Polyisocyanaten zu Polyurethanen, speziell Polyurethanhartschäume nur bedingt geeignet sind.

In WO 2020/083814 A1 wird ein Verfahren zur Herstellung eines Polyoxymethylen-Polyoxyalkylen-Blockcopolymers offenbart umfassend der Reaktion einer polymeren Formaldehydverbindung mit Alkylenoxiden in Gegenwart eines Doppelmetallcyanid (DMC)-Katalysators und einer H-funktionellen Startersubstanz, wobei die theoretische Molmasse der polymeren Formaldehydverbindung kleiner ist als die theoretische Molmasse der H-funktionellen Startersubstanz. Hierbei ist Charakteristikum des DMC-Katalysators die spezifische "catch-up" Kinetik (M. Ionescu; Chemistry and Technology of Polyols for Polyurethanes 2nd Edition, Rapra Techn. Ltd., 2016 Abschnitt 5.1), wobei für Gemische aus H-funktionellen Startersubstanzen aus einem niedrigen Äquivalentgewicht und einem hohen Äquivalentgewicht, die Alkoxylierung, im Speziellen die Propoxylierung, bevorzugt an der H-funktionellen Startersubstanz mit dem niedrigeren Äquivalentgewicht erfolgt. Als Resultat wird in diesem sogenannten *product-toproduct* Verfahren vorrangig die polymere Formaldehydverbindung statt des ebenfalls difunktionellen Polyoxymethylen-Polyoxyalkylen-Blockcopolymer Produktes, welche als H-funktionelle Startersubstanz verwendet wird, alkoxyliert.

Ausgehend vom Stand der Technik ergab sich daher die Aufgabe ein einfaches und wirtschaftlich vorteilhaftes einstufiges Verfahren zur Herstellung von Polyoxymethylen-Polyoxyalkylen-Copolymeren durch Umsetzung von oligomeren und polymeren Formen des Formaldehyds als Startersubstanz mit Alkylenoxiden zur Verfügung zu stellen, mit dem die sich aus dem Stand der Technik ergebenden Probleme überwunden werden können. Hierbei sollten einphasige Polyoxymethylen-Polyoxyalkylen-Copolymere bereitgestellt werden, wobei der Anteil an Oxymethylen-Einheiten, welche aus der polymeren Formaldehydverbindung stammen im Copolymer erhöht werden bei gleichzeitiger Reduktion des Anteils an Oxyalkyleneinheiten, welche aus dem Alkyenoxid stammen. Die Molmassen als auch die Produkteigenschaften der Copolymere, wie beispielsweise Viskosität und Polydispersitätsindex der Polyoxymethylen-Polyoxyalkylen-Copolymeren sollte vergleichbar mit kommerziell-verfügbaren Polyolen sein, so dass eine direkte Weiterverarbeitung dieser Copolymere mindestens als Bestandteil der Polyolkomponente zu Polyurethanen durch Umsetzung mit Polyisocyanaten, speziell zu Polyurethanschäumen möglich ist.

Eine Teilaufgabe der vorliegenden Anmeldung bestand darüber hinaus darin, auch die Funktionalität, im speziellen die Hydroxylfunktionalität, d.h. die Anzahl freier Hydroxylgruppen, des resultierenden Polyoxymethylen-Polyoxyalkylen-Copolymeren gegenüber der Funktionalität der eingesetzten polymeren Formaldehydverbindung, welche annähernd ausschließlich zwei beträgt, in möglichst einem einstufigen Verfahren zu variieren, um zusätzliche Anwendungsmöglichkeiten - speziell für Polyurethane und hierbei mit Fokus auf Polyurethanschäume - dieses Produktes zu ermöglichen. Im Speziellen soll die Funktionalität, das heißt die Anzahl an terminalen Hydroxylgruppen des Copolymers, größer als 2,0 bevorzugt von 2,4 bis 6 und besonders bevorzugt von 2,6 bis 5,8 sein, um eine räumliche Vernetzung des Copolymers als Polyolkomponente in der Herstellung von Polyurethanen, speziell Polyurethanschäumen zu ermöglichen. Diese Variation der Funktionalität des resultierenden Copolymers sollte erfindungsgemäß direkt bei der Herstellung des Copolymers erfolgen. Dieser einstufige Prozess hat gegenüber dem aus dem Stand der Technik bekannten, meist zweistufigen Blending-Prozess, das heißt das Mischen von mindestens zwei Polyolen mit unterschiedlicher Funktionalität und/oder zahlenmittleren Molmasse um ein Polyolgemisch mit mittlerer Funktionalität und/oder mittlerer zahlenmittleren Molmasse herzustellen, unter anderem einen apparativen Vorteil, da die im Blending Prozess teilweise nur bedingt mischbaren Polyole in einem zusätzlichen Verfahrensschritt mitunter aufwendig vermischt werden müssen, um ein Polyol-Gemisch ("Blend") mit mittlerer Funktionalität zu erhalten. Dabei sollte die zur Herstellung des einphasigen, homogenen Copolymers eingesetzte Stoffmenge an Alkylenoxid mithilfe des erfindungsgemäßen Verfahrens gegenüber der Gesamtstoffmenge an Alkylenoxid (kumulative Alkylenoxid-Stoffmenge der mindestens zwei Polyole) zur Herstellung des aus dem Stand der Technik bekannten Polyolgemisches maximal vergleichbar sein bzw. nicht erhöht werden.

Auch das zahlenmittlere Molekulargewicht Mn des resultierenden Copolymers soll bevorzugt Werte im Bereich von 500 g/mol bis 5000 g/mol aufweisen, um eine direkte Weiterverwendung für Polyurethananwendungen, speziell Polyurethanhartschäume und Polyurethanweichschäume zu realisieren.

Erfindungsgemäß gelöst wird diese Aufgabe durch ein Verfahren zur Herstellung eines Polyoxymethylen-Polyoxyalkylen-Copolymers umfassend der Reaktion einer polymeren Formaldehydverbindung eines Alkylenoxid und einer Komponente (X) in Gegenwart eines Doppelmetallcyanids (DMC)-Katalysators;
wobei die polymere Formaldehydverbindung wenigstens eine terminale Hydroxylgruppe aufweist;
wobei die Komponente (X) wenigstens eine terminale Hydroxylgruppen, wenigstens eine terminale Carboxylgruppen und/oder wenigstens eine terminale Thiolgruppen bevorzugt wenigstens eine terminale Hydroxylgruppen aufweist;
wobei die theoretische Molmasse der polymeren Formaldehydverbindung größer ist als die theoretische Molmasse der Komponente (X);
wobei die Komponente (X) ungleich Verbindungen mit der Formel (I) ist,

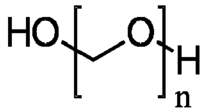

(I)

und wobei n in Formel (I) eine natürliche Zahl von 0 bis 100 ist.

Die Verwendung des Worts ein im Zusammenhang mit zählbaren Größen ist hierbei und im Folgenden nur dann als Zahlwort zu verstehen, wenn dies aus dem Zusammenhang hervorgeht (bspw. durch die Formulierung "genau ein"). Ansonsten umfassen Ausdrücke wie "ein Alkylenoxid", "eine polymere Formaldehydverbindung" etc. immer auch solche Ausführungsformen, in denen zwei oder mehr Alkylenoxide, zwei oder mehr polymere Formaldehydverbindungen etc. eingesetzt werden.

Nachfolgend wird die Erfindung im Detail erläutert. Verschiedene Ausführungsformen sind dabei beliebig miteinander kombinierbar, solange sich für den Fachmann aus dem Kontext nicht eindeutig das Gegenteil ergibt.

Polyoxymethylen-Copolymere im Sinne der Erfindung bezeichnen polymere Verbindungen, die Polyoxymethylen-Einheiten sowie Polyoxyalkylen und/oder Polyoxyalkylencarbonat-Einheiten bevorzugt Polyoxyalkylen-Einheiten enthalten.

In einer Ausführungsform des erfindungsgemäßen Verfahrens weist das Polyoxymethylen-Polyoxyalkylen-Copolymers ein zahlenmittleres Molekulargewicht von 1000 g/mol bis 10000 g/mol, bevorzugt von 1000 g/mol bis 5000 g/mol besonders bevorzugt von 1000 g/mol bis 3000 g/mol auf, wobei das zahlenmittlere Molekulargewicht mittels Gel-Permeations-Chromatographie (GPC) in Anlehnung an DIN 55672-1: "Gelpermeationschromatographie, Teil 1 - Tetrahydrofuran als Elutionsmittel" bestimmt wurde, wobei Polystyrolproben bekannter Molmasse zur Kalibrierung verwendet wurden.

Die erhaltenen Polyoxymethylen-Copolymere bieten gegenüber existierenden Polymeren eine Reihe von Vorteilen. So können bestimmte physikalische Eigenschaften wie Glasübergangstemperaturen, Schmelzbereiche, Viskositäten und Löslichkeiten, etc. über die Länge der Polyoxymethylen-Blöcke im Verhältnis zu den oligomeren Polyoxyalkylen-Blöcken gezielt angesteuert werden.

Gegenüber Polyoxymethylen-Homopolymeren gleichen Molekulargewichts ist die Teilkristallinität in den erfindungsgemäßen Polyoxymethylen-Polyoxyalkylen-Copolymeren typischerweise herabgesetzt, was üblicherweise ebenfalls zu einer Herabsetzung von Glasübergangstemperaturen, Schmelzpunkten und Viskositäten, etc. führt. Die Anwesenheit von zusätzlichen Polyoxyalkylenblöcken führt weiterhin typischerweise zu einer deutlichen Erhöhung der chemischen und thermischen Stabilität. Zudem weisen die erhaltenen Polyoxymethylen-Polyoxyalkylen-Copolymere im Allgemeinen gute Löslichkeiten in diversen Lösungsmitteln auf, sind zumeist leicht und ohne Massenverlust aufschmelzbar oder liegen schon bei niedrigen Temperaturen im flüssigen Zustand vor. Gegenüber Polyoxymethylen-Homopolymeren zeigen die Polyoxymethylen- Polyoxyalkylen-Copolymere somit eine deutlich bessere Verarbeitbarkeit.

Gegenüber Polyetherpolyolen gleichen Molekulargewichts ist der Anteil an Polyoxyalkylen-Einheiten, die aus

den entsprechenden Alkylenoxiden hergestellt werden, um den Polyoxymethylen-Anteil verringert, was zu einer vorteilhaften Wirtschaftlichkeit des Produktes beiträgt. Diverse physikalische Eigenschaften wie Glasübergangstemperaturen, Schmelzbereiche, Viskositäten, Löslichkeit, etc. können für ein gegebenes Molekulargewicht über den Anteil von Polyoxymethylen im Verhältnis zu den Polyoxyalkylen, sowie über das Molekulargewicht der eingesetzten polymeren Formaldehydverbindung, gezielt angesteuert werden.

Dies kann in vorteilhaften physikalischen Eigenschaften insbesondere von Folgeprodukte dieser Polymere resultieren und somit neue Anwendungen ermöglichen.

Der Begriff "Alkyl" umfasst allgemein im Zusammenhang der gesamten Erfindung Substituenten aus der Gruppe n-Alkyl wie Ethyl oder Propyl nicht aber Methyl, verzweigtes Alkyl und/oder Cycloalkyl. Der Begriff "Aryl" umfasst allgemein im Zusammenhang der gesamten Erfindung Substituenten aus der Gruppe Carbo- oder Heteroarylsubstituenten wie Phenyl und/oder mehrkernige Carbo- oder Heteroarylsubstituenten, die gegebenenfalls mit weiteren Alkylgruppen und/oder Heteroatomen wie Stickstoff, Sauerstoff, Silizium, Schwefel oder Phosphor substituiert sein können. Die Reste R1, R2, R3 und/oder R4 können innerhalb einer Wiederholungseinheit so miteinander verknüpft sein, dass sie zyklische Strukturen ausbilden, wie beispielsweise einen Cycloalkyl-Rest, der über zwei benachbarte Kohlenstoffatome in die Polymerkette eingebaut ist.

Als polymere Formaldehydverbindung für das erfindungsgemäße Verfahren eignen sich grundsätzlich solche oligomeren und polymeren Formen des Formaldehyds, welche wenigstens eine terminale Hydroxylgruppe zur Reaktion mit den Alkylenoxiden und den gegebenenfalls weiteren Comonomeren aufweisen. Unter dem Begriff "terminale Hydroxylgruppe" wird erfindungsgemäß insbesondere eine terminale Halbacetal-Funktionalität verstanden, welche sich als Strukturmerkmal über die Polymerisation des Formaldehyds ergibt. Beispielsweise können die Starterverbindungen Oligomere und Polymere des Formaldehyds der allgemeinen Formel (II)

$$HO\text{-}(CH_2O)_n\text{-}H \qquad (II)$$

sein, wobei n für eine ganze Zahl ≥ 2 steht und wobei polymeres Formaldehyd typischerweise n > 8 Wiederholungseinheiten aufweist.

Für das erfindungsgemäße Verfahren geeignete polymere Formaldehydverbindungen weisen im Allgemeinen Molmassen von 62 bis 30000 g/mol, bevorzugt von 62 bis 12000 g/mol, besonders bevorzugt von 242 bis 6000 g/mol und ganz besonders bevorzugt von 242 bis 3000 g/mol auf und umfassen von 2 bis 1000, bevorzugt von 2 bis 400, besonders bevorzugt von 8 bis 200 und ganz besonders bevorzugt von 8 bis 100 Oxymethylen-Wiederholungseinheiten n. Die im erfindungsgemäßen Verfahren eingesetzten Verbindungen haben typischerweise eine Funktionalität (F) von 1 bis 3, in bestimmten Fällen können diese aber auch höherfunktionell sein, also eine Funktionalität > 3 besitzen. Bevorzugt werden im erfindungsgemäßen Verfahren offenkettige polymere Formaldehydverbindungen mit terminalen Hydroxylgruppen eingesetzt, welche eine Funktionalität von 1 bis 10, bevorzugt von 1 bis 5, besonders bevorzugt von 2 bis 3 haben. Ganz besonders bevorzugt werden im erfindungsgemäßen Verfahren lineare polymere Formaldehydverbindungen eingesetzt, welche eine Funktionalität von 2 aufweisen. Die Funktionalität F entspricht der Anzahl an OH-Endgruppen pro Molekül.

Die Herstellung der polymeren Formaldehydverbindungen, welche für das erfindungsgemäße Verfahren eingesetzt werden, kann nach bekannten Verfahren erfolgen (vgl. z.B. M. Haubs et. al., 2012, Polyoxymethylenes, Ullmann's Encyclopedia of Industrial Chemistry; G. Reus et. al., 2012, Formaldehyde, ibid.). Die Formaldehydverbindungen können im erfindungsgemäßen Verfahren grundsätzlich auch in Form eines Copolymers eingesetzt werden. Weitere geeignete Formaldehyd-Copolymere für das erfindungsgemäße Verfahren sind Copolymere des Formaldehyds sowie des Trioxans mit cyclischen und/oder linearen Formalen, wie beispielsweise Butandiolformal. Es ist ebenfalls denkbar, dass als Comonomere höhere homologe Aldehyde, wie beispielweise Acetaldehyd, Propionaldehyd, etc., in das Formaldehyd-Polymer eingebaut sind. Ebenfalls ist es denkbar, dass erfindungsgemäße Formaldehydverbindungen wiederum ausgehend von H funktionellen Starterverbindungen hergestellt werden, insbesondere lassen sich hierbei durch den Einsatz von mehrwertigen Verbindungen polymere Formaldehydverbindungen mit einer Hydroxy-Endgruppen-Funktionalität F > 2 erhalten (vgl. z.B. WO 1981001712 A1, Bull. Chem. Soc. J., 1994, 67, 2560-2566, US 3436375, JP 03263454, JP 2928823).

Bekanntlich polymerisiert Formaldehyd bereits durch die Gegenwart geringer Wasserspuren. In wässriger Lösung bildet sich daher in Abhängigkeit von Konzentration und Temperatur der Lösung ein Gemisch von Oligomeren und Polymeren unterschiedlicher Kettenlängen, welche mit molekularem Formaldehyd und Formaldehyd-Hydrat im Gleichgewicht stehen. Sogenanntes Paraformaldehyd fällt hierbei als ein weißer, schlecht-löslicher Feststoff, aus der Lösung aus und stellt in der Regel ein Gemisch linearer Formaldehyd-Polymere mit n = 8 bis 100 Oxymethylen-Wiederholungseinheiten dar.

Ein Vorteil des erfindungsgemäßen Verfahrens liegt insbesondere darin, dass polymeres Formaldehyd bzw. sogenanntes Paraformaldehyd, welches kommerziell und kostengünstig erhältlich ist, direkt als Reaktand eingesetzt werden kann, ohne dass hierbei zusätzliche vorbereitende Schritte nötig sind. In einer vorteilhaften Ausführungsform

der Erfindung wird daher Paraformaldehyd als Reaktand eingesetzt.

Vorzugsweise werden hierbei lineare Formaldehydverbindungen der allgemeinen Formel (II) HO-($CH_2O$)n-H, wobei n für eine ganze Zahl ≥ 2 steht, bevorzugt mit n = 2 bis 1000, besonders bevorzugt mit n = 2 bis 400 und ganz besonders bevorzugt mit n = 8 bis 100, mit zwei terminalen Hydroxylgruppen eingesetzt. Insbesondere können als Starterverbindung auch Gemische von polymeren Formaldehyd-Verbindungen der Formel HO-($CH_2O$)n-H mit jeweils unterschiedlichen Werten für n eingesetzt werden. In einer vorteilhaften Ausführungsform enthalten die eingesetzten Gemische von polymeren Formaldehydverbindungen der Formel (II) HO-($CH_2O$)n-H wenigstens 1 Gew-%, bevorzugt wenigstens 5 Gew.-% und besonders bevorzugt wenigstens 10 Gew.-% an polymeren Formaldehyd-Verbindungen mit n ≥ 20.

In einer bevorzugten Ausführungsform des erfindungsgemäßen Verfahrens weist die polymere Formaldehydverbindung 2 Hydroxylgruppen und 8 bis 100 Oxymethylen-Wiederholungseinheiten (n) oder 3 Hydroxylgruppen und 8 bis 100 Oxymethylen-Wiederholungseinheiten (n) auf.

Erfindungsgemäß ist die theoretische Molmasse der polymeren Formaldehydverbindung größer als die theoretische Molmasse der Komponente (X)
Weiterhin ist die Komponente (X) ungleich Verbindungen mit der Formel (I),

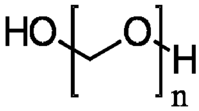

(I)

wobei n in Formel (I) eine natürliche Zahl von 0 bis 100 ist.

Verbindungen der Formel (I) umfassen beispielsweise Wasser mit n=0 oder monomere, oligomere oder polymere Formaldehydverbindungen mit n=1 bis 100.

Weiterhin weist die erfindungsgemäße Komponente (X) wenigstens eine terminale Hydroxylgruppen, wenigstens eine terminale Carboxylgruppen und/oder wenigstens eine terminale Thiolgruppen bevorzugt wenigstens eine terminale Hydroxylgruppen auf.

In einer Ausführungsform des erfindungsgemäßen Verfahrens weist die Komponente (X) eine bis sechs terminale Hydroxylgruppen, eine bis sechs terminale Carboxylgruppen und/oder eine bis sechs terminale Thiolgruppen, bevorzugt zwei bis sechs terminale Hydroxylgruppen, zwei bis sechs terminale Carboxylgruppen und/oder zwei bis sechs terminale Thiolgruppen besonders bevorzugt drei bis sechs terminale Hydroxylgruppen, drei bis sechs terminale Carboxylgruppen und/oder drei bis sechs terminale Thiolgruppen auf.

In einer bevorzugtesten Ausführungsform des erfindungsgemäßen Verfahrens weist die Komponente (X) drei bis sechs terminale Hydroxylgruppen auf wie beispielsweise 1,1,1-Trimethylolpropan, Glycerin, Pentaerythritol, Sorbitol, Saccharose, Xylitol.

In einer Ausführungsform des erfindungsgemäßen Verfahrens ist die Anzahl an terminalen Hydroxylgruppen, terminalen Carboxylgruppen und/oder terminalen Thiolgruppen der Komponente (X) ungleich der Anzahl der terminalen Hydroxylgruppen der polymeren Formaldehydverbindung. Hierdurch kann die Funktionalität des resultierenden Polyoxymethylen-Polyoxyalkylen-Copolymers gezielt eingestellt werden. Speziell für drei bis sechs terminale Hydroxylgruppen, drei bis sechs terminale Carboxylgruppen und/oder drei bis sechs terminale Thiolgruppen der Komponente (X) kann für das resultierende Polyoxymethylen-Polyoxyalkylen-Copolymer eine Funktionalität, das heißt die Anzahl an terminalen Hydroxylgruppen größer als 2,0 bevorzugt von 2,4 bis 6 und besonders bevorzugt von 2,6 bis 5,8 eingestellt werden, welche für Folgeanwendungen dieses Polyoxymethylen-Polyoxyalkylen-Copolymers beispielsweise in der Herstellung von Polyurethanen (PU), wie beispielsweise Polyurethanhart- oder Polyurethanweichschäumen durch Umsetzung des Polyoxymethylen-Polyoxyalkylen-Copolymers mit einem Polyisocyanat essentiell sind, um räumlich vernetzte Polyurethane speziell PU-Schäume bereitstellen zu können.

In einer Ausführungsform des erfindungsgemäßen Verfahrens ist die Komponente (X) eine OH-funktionelle Startersubstanz (1-1), eine SH-funktionelle Startersubstanz (1-2), und/oder eine COOH funktionelle Startersubstanz (1-3) bevorzugt eine OH-funktionelle Startersubstanz (1-1).

Hierbei ist unter einer OH-funktionellen Startersubstanz (1-1) eine Verbindung mit mindestens einer freien (terminalen) Hydroxylgruppe, eine SH-funktionelle Startersubstanz (1-2) mit mindestens einer Thiolgruppe, und/oder eine COOH funktionelle Startersubstanz (1-3) mit mindestens einer freien Carboxylgruppe zu verstehen.

Als Komponente (X) können beispielsweise eine oder mehrere Verbindungen ausgewählt werden aus der Gruppe umfassend Wasser bzw. ein- oder mehrwertige Alkohole, ein- oder mehrwertige Carbonsäuren, Hydroxycarbonsäuren, Hydroxyester, Polyetherpolyole, Polyesterpolyole, Polyesteretherpolyole, Polyethercarbonatpolyole, Polyetherestercarbonatpolyole, Polycarbonatpolyole, Polycarbonate, Polytetrahydrofurane (z.B. PolyTHF® der BASF, wie z.B. PolyTHF® 250, 650S, 1000, 1000S, 1400, 1800, 2000), Polyacrylatpolyole, Ricinusöl, das Mono- oder Diglycerid

von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als Komponente (X) können monofunktionelle Startersubstanzen wie Alkohole als OH-funktionelle Startersubstanz (1-1), Thiole als SH-funktionelle Startersubstanz (1-2) und Carbonsäuren als COOH funktionelle Startersubstanz (1-3) eingesetzt werden. Als monofunktionelle Alkohole können Verwendung finden: Methanol, Ethanol, Ethenol, 1-Propanol, 2-Propanol, 2-Propenol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, 1-Dodecanol, Palmerol, 1-Hexadecanol, Phenol, 2-Hydroxybiphenyl, 3-Hydroxybiphenyl, 4-Hydroxybiphenyl.

Geeignete mehrwertige Alkohole als OH-funktionelle Startersubstanzen (1-1) mit mindestens zwei terminalen Hydroxylgruppen sind beispielweise zweiwertige Alkohole (wie beispielweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielweise 3-Methyl-1,5-pentandiol), 1,6-Hexandiol; 1,8-Octandiol, 1,10-Decandiol, 1,12-Dodecandiol, Bis(2-hydroxyethyl) terephthalat, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Als SH-funktionelle Startersubstanzen (1-2) sind beispielsweise Acetylcystein, Dimercaptobernsteinsäure, Dimercaptopropansulfonsäure, Ethanthiol (Ethylmercaptan), Dithiothreitol (DTT), Dithioerythritol (DTE), Cystein, Penicillamin, 1-Propanthiol, 2-Propanthiol, Glutathion, Homocystein, 2-Mercaptoethansulfonat-Natrium, Methanthiol (Methylmercaptan) und Thiophenol zu nennen.

Als einwertige Carbonsäuren als COOH-funktionelle Startersubstanz (1-3) mit einer freien Carboxylgruppe eignen sich Methansäure, Ethansäure, Propansäure, Butansäure, Pentansäure, Hexansäure, Heptansäure, Octansäure, Milchsäure, Stearinsäure, Palmitinsäure, Ölsäure, Linolsäure, Linolensäure, Benzoesäure, Acrylsäure, Fluoressigsäure, Chloressigsäure, Bromessigsäure, Iodessigsäure, Difluoressigsäure, Trifluoressigsäure, Dichloressigsäure, Trichloressigsäure, Ölsäure, Salicylsäure und Benzoesäure. Darüber hinaus können Gemische aus Fettsäure-/Fettalkohol eingesetzt werden, bevorzugt C10-C18.

Mehrwertige Carbonsäuren als COOH funktionelle Startersubstanz (1-3) mit mindestens zwei Carboxygruppen sind erfindungsgemäß eine oder mehrere Verbindungen ausgewählt aus der Gruppe bestehend aus Oxalsäure, Malonsäure, Bernsteinsäure, Glutarsäure, Adipinsäure, Pimelinsäure, Korksäure, Azelainsäure, Sebacinsäure, Trimesinsäure, Fumarsäure, Maleinsäure, 1,10-Decandicarbonsäure, 1,12-Dodecandicarbonsäure, Phthalsäure, Isophthalsäure, Terephthalsäure, Pyromellitsäure und Trimellitsäure.

Als Komponente (X) können auch geeignete Hydroxycarbonsäuren verwendet werden, wobei beispielsweise Ricinolsäure, Glycolsäure, Milchsäure, 3-Hydroxypropionsäure, Äpfelsäure, Zitronensäure, Mandelsäure, Tartronsäure, Weinsäure, Mevalonsäure, 4-Hydroxybuttersäure, Salicylsäure, 4-Hyroxybenzoesäure und Isocitronensäure zu nennen sind.

Die OH-funktionellen Startersubstanzen (1-1) können auch aus der Substanzklasse der Polyetherpolyole ausgewählt sein, insbesondere solchen mit einem Molekulargewicht Mn im Bereich von 50 bis 4000 g/mol, bevorzugt von 50 bis 2000 g/mol und besonders bevorzugt von 50 bis 1000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 4000I, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die OH-funktionellen Startersubstanzen (1-1) können auch aus der Substanzklasse der Polyesterpolyole ausgewählt sein, insbesondere solchen mit einem Molekulargewicht Mn im Bereich von 50 bis 4000 g/mol, bevorzugt von

50 bis 2000 g/mol und besonders bevorzugt von 100 bis 1000 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Bernsteinsäureanhydrid, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Die resultierenden Polyesterpolyole weisen hierbei terminale Hydroxy- und/oder Carboxygruppen auf.

Des Weiteren können als OH-funktionelle Startersubstanzen (1-1) Polycarbonatdiole eingesetzt werden, insbesondere solche mit einem Molekulargewicht Mn im Bereich von 50 bis 4000 g/mol, bevorzugt von 50 bis 2000 g/mol und besonders bevorzugt von 50 bis 1000 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der Covestro AG verwendet werden, wie z.B. Desmophen® C 1100 oder Desmophen® C 2200.

In einer weiteren Ausführungsform der Erfindung können Polyethercarbonatpolyole (z.B. cardyon® Polyole der Fa. Covestro), Polycarbonatpolyole (z.B. Converge® Polyole der Fa. Novomer / Saudi Aramco, NEOSPOL Polyole der Fa. Repsol etc.) und/oder Polyetherestercarbonatpolyole als OH-funktionelle Starterverbindungen (1-1) eingesetzt werden. Insbesondere können Polyethercarbonatpolyole, Polycarbonatpolyole und/oder Polyetherestercarbonatpolyole durch Umsetzung von Alkylenoxiden, bevorzugt Ethylenoxid, Propylenoxid oder deren Mischungen, optional weiteren Co-Monomeren mit $CO_2$ in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und $CO_2$ gibt zum Beispiel Chemical Communications 47 (2011) 141-163. Durch die Verwendung unterschiedlicher Katalysatorsysteme, Reaktionsbedingungen und/oder Reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als OH-funktionelle Starterverbindungen (1-1) eingesetzten Polyethercarbonatpolyole, Polycarbonatpoylole und/oder Polyetherestercarbonatpolyole können hierzu in einem separaten Reaktionsschritt zuvor hergestellt werden.

Die OH-funktionellen Startersubstanzen (1-1) weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die OH-funktionellen Startersubstanzen (1-1) werden entweder einzeln oder als Gemisch aus mindestens zwei OH-funktionellen Startersubstanzen (1-1) eingesetzt.

Bevorzugte OH-funktionelle Startersubstanzen (1-1) sind Alkohole mit einer Zusammensetzung nach der allgemeinen Formel (III),

$$HO\text{-}(CH2)_X\text{-}OH \qquad (III)$$

wobei x eine Zahl von 1 bis 20, bevorzugt eine gerade Zahl von 2 bis 20 ist. Beispiele für Alkohole gemäß Formel (1) sind Ethylenglycol, 1,3-Propandiol, 1,4-Butandiol, 1,6-Hexandiol, 1,8-Octandiol, 1,10-Decandiol und 1,12-Dodecandiol. Weitere bevorzugte OH-funktionelle Startersubstanzen (1-1) sind Neopentylglykol, Trimethylolpropan, Glycerin und Pentaerythrit.

Weiterhin bevorzugt werden als OH-funktionelle Startersubstanzen (1-1), Diethylenglykol, Dipropylenglykol, Rizinusöl, Sorbitol und Polyetherpolyole, aufgebaut aus sich wiederholenden Polyalkylenoxideinheiten, eingesetzt.

Besonders bevorzugt handelt es sich bei OH-funktionelle Startersubstanz (1-1) um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylol¬propan, di- und trifunktionelle Polyetherpolyole, wobei das Polyetherpolyol aus einer di- oder tri-H-funktionellen Startersubstanz und Propylenoxid bzw. einer di- oder tri-H-funktionellen Startersubstanz, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 4500 g/mol und insbesondere ein Molekulargewicht Mn im Bereich von 62 bis 3000 g/mol.

In einer Ausführungsform des erfindungsgemäßen Verfahrens beträgt OH-Funktionalität der OH-funktionelle

Startersubstanz (1-1) als Komponente (X) von 3 bis 6 und mit einem Molekulargewicht Mn von 50 g/mol bis 2000 g/mol, bevorzugt mit OH-Funktionalität von 2 bis 4 und einem Molekulargewicht Mn von 50 g/mol bis 1000 g/mol.

In einer Ausführungsform des erfindungsgemäßen Verfahrens ist die Komponente (X) eine oder mehrere Verbindung(en) und ausgewählt wird aus der Gruppe bestehend aus Ethylenglycol, Diethylenglycol, Polyethylenglycol, Propylenglykol, Methylpropylenglykol, Dipropylenglykol, Polypropylenglycol, 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol, Bisphenol A, 1,2,3-Trihydroxybenzole, 1,2,4-Trihydroxybenzole, 1,3,5-Trihydroxybenzole, 1,2,4,5-tetrahydroxybenzol, Trihydroxytoluole (alle Isomere), Benzenehexol, Hydroxy-Quinone, Bernsteinsäure, Adipinsäure, Glutarsäure, Pimelinsäure, Maleinsäure, Phthalsäure, Terephthalsäure, Milchsäure, Zitronensäure, Salicylsäure und Ester der vorgenannten Alkohole und Säuren.

In einer bevorzugten Ausführungsform des erfindungsgemäßen Verfahrens ist die Komponente (X) eine oder mehrere Verbindung(en) und ausgewählt wird aus der Gruppe bestehend aus Ethylenglycol, Diethylenglycol, Polyethylenglycol, Methylpropylenglykol, Dipropylenglykol, Polypropylenglycol, 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol bevorzugt Polypropylenglycol, 1,1,1-Trimethylolpropan, Glycerin und Sorbitol.

In einer Ausführungsform des erfindungsgemäßen Verfahrens beträgt der Stoffmengenanteil der Komponente (X) von 0,5 mol-% bis 95 mol-%, bevorzugt von 1 mol-% bis 90 mol-% und besonders bevorzugt von 10 mol-% bis 85 mol-% bezogen auf die Summe der Stoffmengen der polymeren Formaldehydverbindung und der Komponente (X).

In einer bevorzugten Ausführungsform des erfindungsgemäßen Verfahrens weist die Komponente (X) drei bis sechs terminale Hydroxylgruppen auf und der Komponente (X) beträgt von 0,5 mol-% bis 95 mol-%, bevorzugt von 1 mol-% bis 90 mol-% und besonders bevorzugt von 10 mol-% bis 85 mol-% bezogen auf die Summe der Stoffmengen der polymeren Formaldehydverbindung.

Als Epoxid Alkylenoxid (Epoxid) werden für die Herstellung der Polyoxymethylen-Copolymere Verbindungen der allgemeinen Formel (IV):

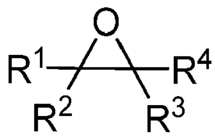

(IV)

eingesetzt, wobei $R^1$, $R^2$, $R^3$ und $R^4$ unabhängig voneinander für Wasserstoff oder einen gegebenenfalls zusätzliche Heteroatome wie Stickstoff, Sauerstoff, Silizium, Schwefel oder Phosphor enthaltenden Alkyl- oder Arylrest stehen und ggf. so miteinander verknüpft sein können, dass sie zyklische Strukturen ausbilden, wie beispielsweise ein Cycloalkylenoxid.

Im Rahmen des erfindungsgemäßen Verfahrens können grundsätzlich solche Alkylenoxide eingesetzt werden, welche sich für die Polymerisation in Gegenwart eines DMC-Katalysators eignen. Werden verschiedene Alkylenoxide verwendet, so können diese entweder als Mischung oder nacheinander zudosiert werden. Bei letzterer Dosierweise können die Polyetherketten des hierüber erhaltenen Polyoxymethylen-Polyoxyalkylen-Copolymers ihrerseits ebenfalls eine Copolymerstruktur aufweisen.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, C1-C24-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyioxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltrlisopropoxysilan. Vorzugsweise ist das Epoxid der allgemeinen Formel (I) ein terminales Epoxid, wobei R1, R2 und R3 für Wasserstoff stehen, und R4 Wasserstoff, ein gegebenenfalls zusätzliche Heteroatome wie Stickstoff, Sauerstoff, Silizium, Schwefel oder Phosphor enthaltender Alkyl- oder Arylrest sein kann und sich in verschiedenen Wiederholungseinheiten unterscheiden kann.

In einer bevorzugten Ausführungsform des erfindungsgemäßen Verfahrens ist das Alkylenoxid eine oder mehrere Verbindung(en) und ausgewählt wird aus der Gruppe bestehend aus Ethylenoxid, Propylenoxid, Styroloxid und

Cyclohexenoxid bevorzugt Ethylenoxid und Propylenoxid und besonders bevorzugt Propylenoxid.

Suspensionsmittel

In einer Ausführungsform des erfindungsgemäßen Verfahrens wird ein Suspensionsmittel verwendet, wobei bevorzugt das eingesetzte Suspensionsmittel keine H-funktionellen Gruppen enthält. Als Suspensionsmittel ohne H-funktionelle Gruppen sind alle polar-aprotischen, schwach polar-aprotischen und unpolar-aprotischen Lösungsmittel geeignet, die jeweils keine H-funktionellen Gruppen enthalten. Als Suspensionsmittel kann auch eine Mischung aus zwei oder mehreren dieser Suspensionsmittel eingesetzt werden.

In einer Ausführungsform des erfindungsgemäßen Verfahrens ist das Suspensionsmittel, dass keine H-funktionellen Gruppen enthält eine oder mehrere Verbindung(en) ist und ausgewählt wird aus der Gruppe bestehend aus 4-Methyl-2-oxo-1,3-dioxolan, 1,3-Dioxolan-2-on, Aceton, Methylethylketon, Acetonitril, Nitromethan, Dimethyl¬sulf¬oxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetra¬chlor¬kohlenstoff.

Bevorzugt als Suspensionsmittel, dass keine H-funktionellen Gruppen enthält, werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3 Dioxolan-2-on und Toluol oder eine Mischung aus 4-Methyl-2-oxo-1,3-dioxolan und 1,3 Dioxolan-2-on und/oder Toluol. Es ist ebenfalls auch möglich als Suspensionsmittel eine weitere Starterverbindung, welche unter den Reaktionsbedingungen in flüssiger Form vorliegt, im Gemisch mit der polymeren Formaldehyd-Starterverbindung einzusetzen.

In einer alternativen Ausführungsform des erfindungsgemäßen Verfahrens wird in Schritt (a) ein Suspensionsmittel, das H-funktionelle Gruppen enthält, gemeinsam mit DMC-Katalysator im Reaktor vorgelegt. In einer bevorzugten Ausführungsform ist das Suspensionsmittel, das H-funktionelle Gruppen enthält enthaltend den DMC-Katalysator, ein Polyoxymethylen-Polyoxyalkylen-Copolymer erhältlich aus einer zeitlich vorangegangenen Herstellungsverfahren enthaltend einen aktivierten DMC-Katalysator. Hierdurch werden mögliche Abtrennungsschritte im Vergleich zum Einsatz eines Suspensionsmittels das keine H-funktionelle Gruppen aufweist eingespart, wodurch ein einfacheres und effizienteres Verfahren resultiert.

Die in dem erfindungsgemäßen Verfahren vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Doppelmetallcyanid (DMC)-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonaten bei sehr geringen Katalysatorkonzentrationen. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. *tert*-Butanol) noch einen Polyether mit einem zahlenmittlerem Molekulargewicht größer als 500 g/mol enthalten.

Die erfindungsgemäß einsetzbaren DMC-Katalysatoren werden vorzugsweise erhalten, indem man

(1.) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(2.) wobei im zweiten Schritt der Feststoff aus der aus (a) erhaltenen Suspension durch bekannte Techniken (wie Zentrifugation oder Filtration) abgetrennt wird,

(3.) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(4.) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäß einsetzbaren DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise wird eine wässrige Zinkchlorid-Lösung (bevorzugt im Überschuss bezogen auf das Metallcyanidsalz) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze weisen bevorzugt eine Zusammensetzung nach der allgemeinen Formel (V) auf,

$M(X)_n$ (V),

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat und
n ist 2, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VI) auf,

$M_r(X)_3$ (VI),

wobei

M ausgewählt ist aus den Metallkationen $Fe^{3+}$, $Al^{3+}$, $Co^{3+}$ und $Cr^{3+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanate Isocyanat, Isothiocyanat, Carboxylat, Oxalat und Nitrat;
r ist 2, wenn X = Sulfat, Carbonat oder Oxalat und
r ist 1, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VII) auf,

$M(X)_s$ (VII),

wobei

M ausgewählt ist aus den Metallkationen $Mo^{4+}$, $V^{4+}$ und $W^{4+}$,
X umfasst ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat und
s ist 4, wenn X = Halogenid, Hydroxid, Carboxylat, Cyanat, Thiocyanat, Isocyanat, Isothiocyanat oder Nitrat,
oder geeignete Metallsalze weisen bevorzugt eine Zusammensetzung nach der allgemeinen Formel (VIII) auf,

M(X)t (VIII),

wobei

M ausgewählt ist aus den Metallkationen $Mo^{6+}$ und $W^{6+}$,
X umfasst ein oder mehrere (d.h. verschiedene) Anionen, vorzugsweise Anionen ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat und
t ist 6, wenn X = Halogenid, Hydroxid, Carboxylat, Cyanat, Thiocyanat, Isocyanat, Isothiocyanat oder Nitrat.

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze weisen bevorzugt eine Zusammensetzung nach der allgemeinen Formel (IX) auf

$$(Y)_aM'(CN)_b(A)_c \qquad (IX),$$

wobei
M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II), Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$), A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäß einsetzbaren DMC-Katalysatoren enthalten sind, sind Verbindungen mit Zusammensetzungen nach der allgemeinen Formel (IX)

$$M_x[M'_{x'}(CN)_y]_z \qquad (IX),$$

worin M wie in den Formeln (V) bis (VIII) und
M' wie in Formel (IX) definiert ist, und
x, x', y und z ganzzahlig sind und so gewählt, dass die Elektronenneutralität der Doppelmetallcyanidverbindung gegeben ist.

Vorzugsweise ist
x = 3, x' = 1, y = 6 und z = 2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Kobalt(II)hexacyanokobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt kann Zinkhexacyanokobaltat(III) verwendet werden.

Die bei der Herstellung der DMC-Katalysatoren zusetzbaren organischen Komplexliganden sind beispielsweise in US-A 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert-butylether, Diethylenglykol-mono-tert-butylether, Tripropylenglykolmono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert-butylether und 3-Methyl-3-oxetan-methanol.

Optional werden in der Herstellung der erfindungsgemäß einsetzbaren DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha$,$\beta$-ungesättigten Carbonsäureester oder ionische oberflächen- bzw. grenzflächenaktiven Verbindungen eingesetzt.

Bevorzugt werden bei der Herstellung der erfindungsgemäß einsetzbaren DMC-Katalysatoren die wässrigen Lösungen des Metallsalzes (z.B. Zinkchlorid) im ersten Schritt im stöchiometrischen Überschuss (mindestens 50 Mol-%) bezogen auf das Metallcyanidsalz eingesetzt. Dies entspricht mindestens einem molaren Verhältnis von Metallsalz zu Metallcyanidsalz von 2,25 zu 1,00. Das Metallcyanidsalz (z.B. Kaliumhexacyanokobaltat) wird in Gegenwart des organischen Komplexliganden (z.B. tert-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators, wie beispielsweise in WO-A 01/39883 beschrieben.

Im zweiten Schritt kann die Isolierung des Feststoffs (d.h. die Vorstufe des Katalysators) aus der Suspension durch bekannte Techniken, wie Zentrifugation oder Filtration, erfolgen.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäß einsetzbaren Katalysator entfernt werden. Bevorzugt liegt die Menge des organischen Komplexliganden in der wässrigen Waschlösung zwischen 40 und 80 Gew.%, bezogen auf die Gesamtlösung.

Optional wird im dritten Schritt der wässrigen Waschlösung eine weitere komplexbildende Komponente, bevorzugt im Bereich zwischen 0,5 und 5 Gew.%, bezogen auf die Gesamtlösung, zugefügt.

Außerdem ist es vorteilhaft, den isolierten Feststoff mehr als einmal zu waschen. Vorzugsweise wird in einem ersten Waschschritt (3.-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäß einsetzbaren Katalysator zu entfernen. Besonders bevorzugt liegt die Menge des ungesättigten Alkohols in der wässrigen Waschlösung zwischen 40 und 80 Gew.%, bezogen auf die Gesamtlösung des ersten Waschschritts. In den weiteren Waschschritten (3.-2) wird entweder der erste Waschschritt einmal oder mehrmals, vorzugsweise einmal bis dreimal wiederholt, oder vorzugsweise wird eine nicht-wässrige Lösung, wie z.B. eine Mischung oder Lösung aus ungesättigtem Alkohol und weiterer komplexbildender Komponente (bevorzugt im Bereich zwischen 0,5 und 5 Gew.%, bezogen auf die Gesamtmenge der Waschlösung des Schrittes (3.-2)), als Waschlösung eingesetzt und der Feststoff damit einmal oder mehrmals, vorzugsweise einmal bis dreimal gewaschen.

Der isolierte und gegebenenfalls gewaschene Feststoff kann anschließend, gegebenenfalls nach Pulverisierung, bei Temperaturen von 20 - 100°C und bei Drücken von 0,1 mbar bis Normaldruck (1013 mbar) getrocknet werden.

Ein bevorzugtes Verfahren zur Isolierung der erfindungsgemäß einsetzbaren DMC-Katalysatoren aus der Suspension durch Filtration, Filterkuchenwäsche und Trocknung wird in WO-A 01/80994 beschrieben.

Der Doppelmetallcyanid (DMC)-Katalysator wird vorzugsweise in einer berechneten Menge von 100 bis 3000 ppm, bevorzugt von 120 bis 2500 ppm besonders bevorzugt von 150 bis 2200 bezogen auf die Summe der Massen der polymeren Formaldehydverbindung und des Alkylenoxids eingesetzt. Bei einem hohen Anteil des DMC-Katalysators, müssen die Schwermetalle vor einer weiteren Umsetzung zum Polyurethan abgetrennt werden Unterhalb von 100 ppm des Doppelmetallcyanid (DMC)-Katalysators ist keine katalytische Umsetzung mehr zu beobachten.

Im erfindungsgemäßen Verfahren werden Suspensionsmittel mit H-funktionellen Gruppen oder Suspensionsmittel ohne H-funktionelle Gruppen, bevorzugt Suspensionsmittel ohne H-funktionelle Gruppen verwendet.

In einer Ausführungsform umfasst das erfindungsgemäße Verfahren folgende Schritte:

(a) ein Suspensionsmittel, dass in einem Reaktor vorgelegt wird und

($\gamma$) das Alkylenoxid während der Reaktion stufenweise oder kontinuierlich in den Reaktor zudosiert wird.

In einer Ausführungsform des erfindungsgemäßen Verfahrens enthält das Suspensionsmittel in Schritt (α) keine H-funktionellen Gruppen.

Vorzugsweise wird in Schritt (α) ein Suspensionsmittel, das keine H-funktionellen Gruppen enthält, im Reaktor gemeinsam mit DMC-Katalysator vorgelegt, und dabei wird keine polymere Formaldehydverbindung im Reaktor vorgelegt. Alternativ können auch in Schritt (α) ein Suspensionsmittel, das keine H-funktionellen Gruppen enthält, und zusätzlich eine Teilmenge der polymeren Formaldehydverbindung sowie gegebenenfalls DMC-Katalysator im Reaktor vorgelegt werden.

In einer bevorzugten Ausführungsform wird in das resultierende Gemisch aus Suspensionsmittel und DMC-Katalysator bei einer Temperatur 40 bis 120 °C bevorzugt von 50 bis 100 °C und besonders bevorzugt von 60 bis 90 °C Inertgas, wie beispielsweise Argon oder Stickstoff, ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 40 bis 120 °C bevorzugt von 50 bis 100 °C und besonders bevorzugt von 60 bis 90 °C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) das Suspensionsmittel oder ein Gemisch aus mindestens zwei Suspensionsmitteln vorgelegt und

(α-II) die Temperatur des Suspensionsmittels oder des Gemisches aus mindestens zwei Suspensionsmittel auf 40 bis 120 °C bevorzugt von 50 bis 100 °C und besonders bevorzugt von 60 bis 90 °C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel oder zum Gemisch aus mindestens zwei Suspensionsmitteln in Schritt (α-I) oder unmittelbar anschließend in Schritt (α-II) zugesetzt werden, und wobei das Suspensionsmittel keine H-funktionellen Gruppen enthält.

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxidverbindung bei Temperaturen von 20 °C bis 120 °C bevorzugt von 35 °C bis 105 °C und besonders bevorzugt von 50 °C bis 90 °C zum Gemisch aus Schritt (a) zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von $CO_2$, zum DMC-Katalysator gegeben werden und dann jeweils die Zugabe der Alkylenoxidverbindung unterbrochen werden. Im diesem Fall umfasst der Verfahrensschritt der Aktivierung die Zeitspanne von der Zugabe der ersten Teilmenge an Alkylenoxidverbindung, gegebenenfalls in Gegenwart von $CO_2$, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der polymeren Formaldehydverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge

Alkylenoxidverbindung die Zugabe der Alkylenoxidverbindung bis zum Auftreten der Wärmeentwicklung unterbrochen und erst dann die nächste Teilmenge an Alkylenoxidverbindung zugegeben.

In einer bevorzugten Ausführungsform des erfindungsgemäßen Verfahrens schließt sich an Schritt (α) Schritt (β) an, wobei in Schritt (β) zu dem Gemisch aus Schritt (α) eine Teilmenge an Alkylenoxid bei einer Temperatur von 20 °C bis 120 °C bevorzugt von 35 °C bis 105 °C und besonders bevorzugt von 50 °C bis 90 °C zugegeben wird, und wobei dann die Zugabe der Alkylenoxidverbindung unterbrochen wird.

In einer Ausführungsform des erfindungsgemäßen Verfahrens wird in Schritt (y) die Komponente (X) kontinuierlich oder stufenweise bevorzugt kontinuierlich dosiert. Bevorzugt werden in Schritt (γ) die polymere Formaldehydverbindung und das Alkylenoxid kontinuierlich oder stufenweise bevorzugt kontinuierlich dosiert.

Hierbei erfolgt erfindungsgemäß die Umsetzung in Schritt (γ) bei einer Temperatur von 20 °C bis 130 °C bevorzugt von 40 °C bis 120 °C und besonders bevorzugt von 60 °C bis 110 °C.

Die Dosierung einer oder mehrerer polymeren Formaldehydverbindung(en), eines oder mehrerer Alkylenoxid(e), einer oder mehrerer Komponente(n) (X) und gegebenenfalls auch des Kohlendioxids kann simultan oder sequentiell (portionsweise) erfolgen, beispielsweise kann die gesamte Kohlendioxidmenge, die Menge an polymerer Formaldehydverbindung, der Komponente (X) und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids, der Komponente (X) und/oder der polymeren Formaldehydverbindung den Gasdruck wie beispielsweise den $CO_2$-Druck oder den Inertgasdruck allmählich oder schrittweise zu steigern oder zu senken oder gleich zu lassen. Vorzugsweise wird der Gesamtdruck während der Reaktion durch eine Nachdosierung beispielsweise an Inertgas oder Kohlendioxid konstant gehalten. Die Dosierung eines oder mehrerer Alkylenoxid(e), einer oder mehrerer Komponente(n) (X) und/oder der einen oder mehreren polymere(n) Formaldehydverbindung(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyoxymethylen-Polyoxyalkylen-Copolymere eingesetzt, so können die Alkylenoxide einzeln oder als Gemisch dosiert werden. Die Dosierung der Alkylenoxide bzw. der polymeren Formaldehydverbindung und/oder der Komponente (X) kann simultan oder sequentiell über jeweils separate Dosierungen (Zugaben) erfolgen oder über eine oder mehrere Dosierungen, wobei die Alkylenoxide bzw. die polymeren Formaldehydverbindungen und/oder die Komponente (X) einzeln oder als Gemisch dosiert werden können. Über die Art und/oder Reihenfolge der Dosierung der polymeren Formaldehydverbindungen, der Alkylenoxide, der Komponente (X) und/oder des Kohlendioxids ist es möglich, statistische, alternierende, blockartige oder gradientenartige Polyoxymethylen-Polyoxyalkylen-Copolymers zu synthetisieren.

In einer bevorzugten Ausführungsform wird in Schritt (γ) die Dosierung der einen oder mehreren polymeren Formaldehydverbindung(en) und optional der Komponente (X) bevorzugt der polymeren Formaldehydverbindung(en) und der Komponente (X) zeitlich vor der Zugabe des Alkylenoxids beendet.

In einer weiteren Ausführungsform des erfindungsgemäßen Verfahrens wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren polymeren Formaldehydverbindung(en) zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation in Gegenwart von Kohlenstoffdioxid (Schritt (γ) zur Herstellung der Polyoxymethylen-Polyethercarbonatpolyol-Copolymeren oder die Polymerisation in Gegenwart eines Inertgases wie beispielsweise Stickstoff unter Bildung von Polyoxymethylen-Polyetherpolyol-Copolymeren vorteilhafterweise bei Temperaturen von 20 °C bis 130 °C bevorzugt von 40 °C bis 120 °C und besonders bevorzugt von 60 °C bis 110 °C durchgeführt wird. Werden Temperaturen unterhalb von 20°C eingestellt,

wird die Reaktion im Allgemeinen sehr langsam. Bei Temperaturen oberhalb von 130°C steigt die Menge an unerwünschten Nebenprodukten stark an und es erfolgt eine Zersetzung der polymeren Formaldehydverbindung.

Die Dosierung des Alkylenoxids, der polymeren Formaldehydverbindung, der Komponente (X) und des DMC-Katalysators kann über separate oder gemeinsame Dosierstellen erfolgen. In einer bevorzugten Ausführungsform werden das Alkylenoxid, die Komponente (X) und die polymere Formaldehydverbindung über separate Dosierstellen kontinuierlich dem Reaktionsgemisch zugeführt. Diese Zugabe der einen oder mehreren polymeren Formaldehydverbindung(en) und/oder der einen oder mehreren Komponente(n) (X) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyoxymethylen-Polyoxyalkylen-Copolymere können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids und/oder der polymeren Formaldehydverbindung die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 20 Gew.-%, jeweils bezogen auf das Gewicht der Reaktionsmischung.

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren polymeren Formaldehydverbindung (en), einer oder mehrerer Komponenten (X) und optional Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren polymeren Formaldehydverbindung (en), einer oder mehrerer Komponenten (X) und optional Kohlendioxid umgesetzt.

Bei Reaktionsführung in einem Rohrreaktor werden die gemäß den Schritten (α) und (β) resultierende aktivierte Katalysator-Suspensionsmittel-Mischung, eine oder mehrere polymeren Formaldehydverbindung(en), ein oder mehrere Alkylenoxid(e), ein oder mehrere Komponente(n) (X) und optional Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyoxymethylen-Polyoxyalkylen-Copolymeren verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 20 Gew.-% (jeweils bezogen auf das Gewicht der Reaktionsmischung) gehalten werden kann.

Bevorzugt werden die Polyoxymethylen-Polyoxyalkylen-Copolymere in einem kontinuierlichen Verfahren hergestellt, das sowohl eine kontinuierliche Copolymerisation als auch eine kontinuierliche Zugabe der einen oder mehreren polymeren Formaldehydverbindung(en) und/oder einer oder mehrerer Komponenten (X) umfasst.

In einer weiteren Ausführungsform des erfindungsgemäßen Verfahrens wird in Schritt (γ) das resultierende Reaktionsgemisch kontinuierlich aus dem Reaktor entfernt.

Gegenstand der Erfindung ist daher auch ein Verfahren wobei in Schritt (γ) eine oder mehrere polymeren Formaldehydverbindung(en), ein oder mehrere Alkylenoxid(e), einer oder mehrerer Komponenten (X) sowie DMC-Katalysator optional in Gegenwart von Kohlendioxid kontinuierlich in den Reaktor dosiert werden und wobei das resultierende Reaktionsgemisch (enthaltend das Reaktionsprodukt) kontinuierlich aus dem Reaktor entfernt wird.

Beispielsweise wird für das kontinuierliche Verfahren zur Herstellung der Polyoxymethylen-Polyoxyalkylen-Copolymere gemäß den Schritten (α) und (β) eine aktivierte DMC-Katalysator-Suspensionsmittel-Mischung hergestellt, dann werden gemäß Schritt (γ)

(γ1) jeweils eine Teilmenge an einer oder mehreren polymeren Formaldehydverbindung(en), einem oder mehreren Alkylenoxid(en), ein oder mehrere Komponente(n) (X) und optional Kohlendioxid, und

(y2) während des Fortschreitens der Copolymerisation jeweils die verbleibende Menge an DMC-Katalysator, einer oder mehreren polymeren Formaldehydverbindung(en), Alkylenoxid(en) und ein oder mehrere Komponente(n) (X) optional in Gegenwart von Kohlendioxid kontinuierlich zudosiert, wobei gleichzeitig resultierendes Reaktionsgemisch kontinuierlich aus dem Reaktor entfernt wird.

In Schritt (y) wird der DMC-Katalysator bevorzugt suspendiert im Suspensionsmittel mit H-funktionellen Gruppen oder Suspensionsmittel ohne H-funktionelle Gruppen, bevorzugt Suspensionsmittel ohne H-funktionelle Gruppen zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 3000 ppm beträgt.

Vorzugsweise werden die Schritte (α) und (β) in einem ersten Reaktor durchgeführt, und das resultierende Reaktionsgemisch dann in einen zweiten Reaktor für die Copolymersation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyoxymethylen-Polyoxyalkylen-Copolymerprodukts verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer polymeren Formaldehydverbindung oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyoxymethylen-Polyalkylenoxid-Copolymeren und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Zugabe der polymeren Formaldehydverbindung und/oder der Komponente (X) echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktand, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel verwendet werden.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Ein weiterer Gegenstand der vorliegenden Erfindung sind Polyoxymethylen-Polyoxyalkylen-Copolymere, erhältlich durch das erfindungsgemäße Verfahren.

In einer Ausführungsform der Erfindung hat das Polyoxymethylen-Polyalkylenoxid-Copolymer einem Oxymethylengruppen-Anteil von 1 Gew.-% bis 70 Gew.-% bevorzugt von 10 Gew.-% bis 50 Gew.-% und besonders bevorzugt

von 20 Gew.-% bis 50 Gew.-% bezogen auf das Polyoxymethylen-Polyalkylenoxid-Copolymer Produkt wird und bestimmt mittels der im Experimentalteil beschriebenen 1H-NMR-Methode.

In einer Ausführungsform weisen die Polyoxymethylen-Copolymere ein zahlenmittleres Molekulargewicht von ≤ 15000 g/mol, bevorzugt ≤ 9500 g/mol, besonders bevorzugt ≤ 6000 g/mol, ganz besonders bevorzugt ≤ 5000 g/mol, insbesondere von 200 g/mol bis 9500 g/mol, bevorzugt von 500 g/mol bis 5000 g/mol auf. Das zahlenmittlere Molekulargewicht lässt sich beispielsweise per Gel-Permeations-Chromatographie (GPC) gegen z.B. Polystyrol-Standards und/oder über experimentell ermittelte Hydroxylzahlen (OH#) bestimmen.

In einer bevorzugten Ausführungsform weisen die Polyoxymethylen-Copolymere ein zahlenmittleres Molekulargewicht von von 500 g/mol bis 5000 g/mol, bevorzugt von 1000 g/mol bis 4000 g/mol und besonders bevorzugt von 1500 g/mol bis 3500 g/mol auf. Das zahlenmittlere Molekulargewicht lässt sich beispielsweise per Gel-Permeations-Chromatographie (GPC) gegen z.B. Polystyrol-Standards und/oder über experimentell ermittelte Hydroxylzahlen (OH#) bestimmen.

Die erfindungsgemäßen Polyoxymethylen-Copolymere besitzen vorzugsweise terminale Hydroxy-Gruppen und haben vorzugsweise eine Hydrxyl-Funktionalität F ≥ 2 (Anzahl an Hydroxy-Gruppen pro Molekül).

In einer weiteren Ausführungsform der Polyoxymethylen-Copolymere haben diese eine monomodale Molekulargewichtsverteilung und einen Polydispersitätsindex (PDI) von ≤ 2,5, bevorzugt ≤ 2,2.

Die nach dem erfindungsgemäßen Verfahren erhältlichen Polyoxymethylen- Copolymere enthalten vorzugsweise weniger als 1.0 Gew.-%, insbesondere weniger als 0.5 Gew.-% bezogen auf die Gesamtmasse des erhaltenen Polyoxymethylen-Copolymers, Formiat und/oder Methoxy-Verunreinigungen. Die nach dem erfindungsgemäßen Verfahren erhältlichen Polyoxymethylen-Copolymere weisen im Allgemeinen einen geringen Gehalt an Neben- und Zersetzungsprodukten, wie Formiat, Methoxy-Spuren, monomeres und oligomeres Formaldehyd, Restmonomere auf und können problemlos verarbeitet werden, insbesondere durch Umsetzung mit Di-, Tri und/oder Polyisocyanaten zu Polyurethanen, Isocyanat-funktionalisierten Polyurethan-Präpolymeren oder Polyisocyanuraten, insbesondere Polyurethan-Thermoplasten, Polyurethan-Beschichtungen, -Fasern, -Elastomeren, -Klebstoffen sowie insbesondere auch Polyurethan-Schaumstoffen eingeschlossen Weich- (wie beispielsweise Polyurethan-Weichblockschaumstoffe und Polyurethan-Weichformschaumstoffe) und Hartschäume. Für Polyurethananwendungen werden vorzugsweise Polyoxymethylen-Copolymere eingesetzt, welche eine Funktionalität von mindestens 2 aufweisen. Des Weiteren können die nach dem erfindungsgemäßen Verfahren erhältlichen Polyoxymethylen-Copolymere in Anwendungen wie Wasch- und Reinigungsmittelformulierungen, Klebstoffen, Farben, Lacken, Funktionsfluiden, Bohrflüssigkeiten, Kraftstoffadditiven, ionischen und nicht-ionischen Tensiden, Schmiermitteln, Prozesschemikalien für die Papier- oder Textilherstellung oder kosmetischen / medizinischen Formulierungen verwendet werden. Dem Fachmann ist bekannt, dass abhängig vom jeweiligen Anwendungsgebiet die zu verwendenden Polymere gewisse Stoffeigenschaften wie beispielsweise Molekulargewicht, Viskosität, Polydispersität, Funktionalität und/oder Hydroxylzahl (Anzahl an terminalen Hydroxyl-Gruppen pro Molekül) erfüllen müssen.

Die Erfindung betrifft weiterhin ein Verfahren zur Herstellung eines Polyurethan-Polymers, umfassend den Schritt der Reaktion einer Polyisocyanat-Komponente mit einer Polyolkomponente, wobei die Polyolkomponente das erfindungsgemäße Polyoxymethylen-Polyoxyalkylen-Copolymer umfasst.

In einer Ausführungsform dieses Verfahrens sind die Polyurethan-Polymere Polyurethan-Weichschaumstoffe oder Polyurethan-Hartschaumstoffe. In einer weiteren Ausführungsform dieses Verfahrens sind die Polyurethan-Polymere thermoplastische Polyurethan-Polymere.

Gegenstand der Erfindung ist daher ebenfalls ein Polyurethan-Polymer erhältlich durch Umsetzung eines Di-, Tri- und/oder Polyisocyanats mit wenigstens einem erfindungsgemäßen Polyoxymethylen- Copolymer.

Gegenstand der Erfindung ist ebenfalls ein Polyurethan-Weichschaumstoff oder ein Polyurethan-Hartschaumstoff erhältlich durch Umsetzung eines Di-, Tri- und/oder Polyisocyanats mit wenigstens einem erfindungsgemäßen Polyoxymethylen-Copolymer.

Erfindungsgemäß eingeschlossen ist auch die Verwendung von Polyoxymethylen-Copolymeren gemäß der vorliegenden Erfindung zur Herstellung von Polyurethanen, Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen.

## Beispiele

**Eingesetzte Verbindungen:**

Paraformaldehyd (pFA)

pFA-1 Paraformaldehyd, Formaldehydgehalt 94.5 - 96.5%, Granuform M ®, Prefere Paraform GmbH & Co. KG

pFA-2 wurde wie in Beispiel 2 der am 22. November 2018 eingereichten europäischen Patentanmeldung mit der Anmeldenummer EP18207740 synthetisiert.

Alkylenoxid

PO Reinheit 99%, Sigma-Aldrich

Komponente (X)

X-1 trifunktionelles Polyetherpolyol mit einer Hydroxylzahl 421 mg(KOH)/g, Arcol® Polyol 1030 von Covestro AG

X-2 Sorbitol, Reinheit 99%, Sigma-Aldrich

Doppelmetallcyanid (DMC)-Katalysator

Als DMC-Katalysator wurde bei allen Beispielen DMC-Katalysator hergestellt gemäß Beispiel 6 in WO 01/80994 A1, enthaltend Zinkhexacyanocobaltat, tert.-Butanol und Polypropylenglykol mit einem zahlenmittleren Molekulargewicht von 1000 g/mol, eingesetzt.

Suspensionsmittel

cPC Reinheit 99%, Sigma-Aldrich

**Methodenbeschreibung**

Gel-Permeations-Chromatographie (GPC)

Das Gewichts- und Zahlenmittel des Molekulargewichts Mw und Mn der entstandenen Polymere wurde mittels Gel-Permeations-Chromatographie (GPC) bestimmt. Die GPC Messungen wurden bei 40 °C in Tetrahydrofuran (THF, Flussrate: 1,0 mL/min) in Anlehnung an DIN 55672-1 durchgeführt. Das Säulenset setzte sich aus fünf Säulen zusammen: PSS, 5 µL, 8x50 mL Vorsäule, 2 PSS SVD, 5 µL, 100 Å, 8x300mm, 2 PSS SVD, 5 µL, 1000 Å, 8x300mm)). Proben (Konzentration 2-3 g L-1, Injektionsvolumen 100 µL) wurden mit einem Agilent Technologies 1100 injiziert. Es wurde ein RID Detektor der Agilent 1200 Serie verwendet. Die Rohdateien wurden mit einem PSS WinGPC Unity Software Paket prozessiert. Als Kalibrationsstandard kamen Polystyrol-Kits mit einem bekannten Molekulargewicht zum Einsatz (PSS ReadyCal Kit in einem Bereich von 266 Da bis 66.000 Da wurde verwendet). Das so bestimmte zahlengemittelte Molekulargewicht wurde mittels als $M_n$ in den Beispielen angegeben.

Protonenresonanz-Spektroskopie ($^1$H-NMR)

Der Anteil an eingebautem Formaldehyd (FA) im resultierenden Polymer (FA-Gehalt) wurden mittels $^1$H-NMR Spektroskopie (Firma Bruker, AV III HD 600, 600 MHz; Pulsprogramm zg30, 16 Scans) bestimmt. Die Probe wurde jeweils in deuteriertem Chloroform gelöst. Die relevanten Resonanzen im $^1$H-NMR Spektrum (bezogen auf TMS = 0 ppm) sind wie folgt:

- 1.06 - 1.24 ppm (m): Methylgruppe des Polymer-Backbone (-OCH2CHCH3-)
- 1.49 ppm (d): Methylgruppe (CH3-) von Propylencarbonat (cPC)
- 3.30 - 3.98 ppm (m): restlichen PPG-Backbone Signale (-OCH2CHCH3-)
- 4.04 ppm (dd): CH2-Gruppe von Propylencarbonat (cPC)
- 4.58 ppm (dd): CH2-Gruppe von Propylencarbonat (cPC)
- 4.68 - 4.94 ppm (m): Überlapp der Signale von FA-Gruppe des Polymer-Rückgrats (Backbone) (-CH2O-) und CH-Gruppe von Propylencarbonat (cPC)
- 4.88 ppm (qdd): CH-Gruppe von Propylencarbonat (cPC)

Nach der Standardprozessierung der Spektren (Phasen- und Basislinienkorrektur) wurden die Signale integriert (Fläche: *F*(*n*)) und der Massenanteil des im Polymer eingebauten FA wie folgt berechnet (Zur Berechnung der Gewichtsanteile werden folgende Molmassen (g/mol) verwendet: PO in PPO = 58, FA = 30):

- Massengewichteter Anteil PPG in g/mol: $MA(\mathrm{PPG}) = \frac{F(a)}{3} \times 58\ \mathrm{g/mol}$
- Massengewichteter Anteil FA in g/mol: $MA(\mathrm{FA}) = \frac{F(f)-F(b)/3}{2} \times 30\ \mathrm{g/mol}$
- FA-Anteil in Gew.%: $\omega = \frac{MA(\mathrm{FA})}{MA(\mathrm{PPG})+MA(\mathrm{FA})} \times 100$

**Beispiel 1: Einstufige Herstellung des Polyoxymethylen-Polyalkylenoxid-Copolymers mit Funktionalität von F=2.8 und einer Zielmolmasse Mn von 2825 g/mol**

In einem 1,0 L Druckreaktor wurden 51 g pFA-2 , 49.1 g X-1 als Komponente (X) und 800 mg DMC-Katalysator in 400 g cPC suspendiert. Bei 70 °C unter Rühren (500 rpm) wurde für 30 min eine Inertisierung ($N_2$) durchgeführt. Nach Erreichen der Temperatur wurde zu der Suspension unter Rühren (1000 rpm) 125 g Propylenoxid (21,6 Gew.%) mit einer Förderrate von 10 g/min addiert. Das Einsetzen der Reaktion machte sich durch eine Temperaturspitze ("Hotspot") verbunden mit gleichzeitigem Druckabfall bemerkbar. Anschließend erfolgte die Dosierung von 175 g PO mit einer kontinuierlichen Dosierrate von 1 g/min. Nach beendeter Zugabe wurde bis zum Abklingen der exothermen Reaktion und bis zur Druckkonstanz bei 70 °C nachgerührt. Anschließend wurde das Produktgemisch entnommen und am Rotationsverdampfer bei 60°C und 10 mbar entgast. Das Reaktionsgemisch wurde mittels GPC- und NMR-Analytik untersucht. Laut NMR wurde ein Formaldehyd-Anteil im Polymer von 13,4 Gew.-% ermittelt.

**Beispiel 2: Einstufige Herstellung des Polyoxymethylen-Polyalkylenoxid-Copolymers mit Funktonalität von F=2.8 und einer Zielmolmasse Mn von 2825 g/mol**

Der Versuch wurde analog zu Beispiel 1 durchgeführt, wobei die Menge an X-1 als Komponente X nicht im Reaktor vorgelegt wurde, sondern zeitgleich mit der kontinuierlichen PO-Dosierung über die die ersten 100 g PO dosiert wurde. Die verbleibenden 75 g PO wurden entsprechend ohne den Co-Starter dosiert. Laut NMR wurde ein Formaldehyd-Anteil im Polymer von 11,1 Gew.-% ermittelt.

**Beispiel 3: Einstufige Herstellung des Polyoxymethylen-Polyalkylenoxid-Copolymers mit Funktionalität von F=2.8 und einer Zielmolmasse Mn von 2823 g/mol**

In einem 1,0 L Druckreaktor wurden 10 g pFA-1, und 387 mg DMC-Katalysator in 150 g cPC suspendiert. Bei 60 °C und unter Rühren (500 rpm) wurde für 30 min eine Inertisierung (25 L($N_2$)/h bei 30 mbar) durchgeführt. Anschließend wurde die Reaktionsmischung unter Rühren (1000 rpm) auf 70 °C erhitzt. Nach Erreichen der Temperatur wurden 40 g Propylenoxid (11 Gew.%) mit einer Förderrate von 10 g/min schnell addiert. Das Einsetzen der Reaktion machte sich durch eine Temperaturspitze ("Hotspot") verbunden mit gleichzeitigem Druckabfall bemerkbar. Anschließend erfolgte bei 100 °C und 1000 rpm Rührergeschwindigkeit die Dosierung von 281 g PO mit einer kontinuierlichen Dosierrate von 0,9 g/min und von 51 g pFA-1 sowie 4,99 g X-2 als Komponente (X) als Suspension in 273 g cPC mit einer kontinuierlichen Dosierrate von 1.7 g/min. Nach beendeter Zugabe wurde bis zum Abklingen der exothermen Reaktion und bis zur Druckkonstanz bei 70 °C nachgerührt (ca. 35 min). Anschließend wurde das Produktgemisch entnommen und am Rotationsverdampfer bei 60 °C und 10 mbar entgast. Das Reaktionsgemisch wurde mittels GPC- und NMR-Analytik untersucht.
Laut NMR wurde ein Formaldehyd-Anteil im Polymer von 24,9 Gew.-% ermittelt

**Vergleichsbeispiel 4: Zweistufige Herstellung eines Polyol-Gemisches ("Blend") mit einer Funktionalität von F=2.8 und einer Zielmolmasse Mn von 2825 g/mol durch zweistufiges Mischen eines Polyoxymethylen-Polyalkylenoxid-Copolymers mit Funktionalität 2 und einer Zielmolmasse von 2825 g/mol ohne Zugabe der Komponente (X) mit einem trifunktionellen Polyol der Molmasse von 2825 g/mol.**

Für die Herstellung des Polyoxymethylen-Polyalkylenoxid-Copolymers mit Funktionalität 2 und einer Zielmolmasse von 2825 g/mol ohne Zugabe der Komponente (X) wurde in einem 1,0 L Druckreaktor 51 g pFA-2, 800 mg

getrockneter DMC-Katalysator in 400 g cPC suspendiert. Für 30 min. bei 70 °C unter Rühren (500 rpm) wurde eine Inertisierung (N2) durchgeführt. Zu der Mischung wurden 21 g Propylenoxid mit einer Förderrate von 10 g/min schnell addiert. Das Einsetzen der Reaktion konnte nicht beobachtet werden, so dass das Polyoxymethylen-Polyalkylenoxid-Copolymer und somit auch das Polyol-Gemisch nicht hergestellt werden konnte.

**Tabelle 1**

| Bsp. | pFA /M (pFA) [g/mol] | Komponente (X) | $M_n$ (Ziel) [g/mol] | n (X)[d] [mol-%] | kontinuierli che Zugabe in Schritt γ | m (DMC)[a] [ppm] | $M_n$(GPC) [g/mol][b] | PDI | pFA [Gew. %] |
|---|---|---|---|---|---|---|---|---|---|
| 1 | pFA-2 2000 | X-1 | 2825 | 82 | PO | 2000 | 3096 | 1,08 | 13,4 |
| 2 | pFA-2 2000 | X-1 | 2825 | 82 | PO + X-1 | 2000 | 3133 | 1,23 | 11,1 |
| 3 | pFA-1 480 | X-2 | 2823 | 18 | PO+X-2+pFA-1 | 1000 | 3557 | 1,278 | 15,6 |
| 4 (Vgl.) | pFA-2 2000 | - | 2825 | - | PO | 2000 | Kein Polymer[c] | - | |

[a] DMC-Katalysatorbeladung m(DMC) bezogen auf die Summe der Massen der polymeren Formaldehydverbindung und des Alkylenoxids, [b] zahlenmittleres Molekulargewicht des Polyoxymethylen-Polyoxyalkylen-Copolymers, [c] kein kettenverlängertes Produkt wurde erhalten, [d] Stoffmengenanteil der Komponente (X) n(X) bezogen auf die Summe des Stoffmengenanteils der polymeren Formaldehydverbindung n(pFA) und Stoffmengenanteil der Komponente (X)

## Patentansprüche

1. Verfahren zur Herstellung eines Polyoxymethylen-Polyoxyalkylen-Copolymers umfassend der Reaktion einer polymeren Formaldehydverbindung eines Alkylenoxid und einer Komponente (X) in Gegenwart eines Doppelmetallcyanid (DMC)-Katalysators;
   wobei die polymere Formaldehydverbindung wenigstens eine terminale Hydroxylgruppe aufweist;
   wobei die Komponente (X) wenigstens eine terminale Hydroxylgruppen, wenigstens eine terminale Carboxylgruppen und/oder wenigstens eine terminale Thiolgruppen bevorzugt wenigstens eine terminale Hydroxylgruppen aufweist;
   wobei die theoretische Molmasse der polymeren Formaldehydverbindung größer ist als die theoretische Molmasse der Komponente (X);
   wobei die Komponente (X) ungleich Verbindungen mit der Formel (I) ist,

   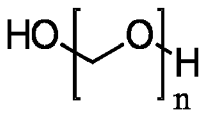

   (I)

   und wobei n in Formel (I) eine natürliche Zahl von 0 bis 100 ist.

2. Verfahren gemäß Anspruch 1, wobei die Komponente (X) eine bis sechs terminale Hydroxylgruppen, eine bis sechs terminale Carboxylgruppen und/oder eine bis sechs terminale Thiolgruppen, bevorzugt zwei bis sechs terminale Hydroxylgruppen, zwei bis sechs terminale Carboxylgruppen und/oder zwei bis sechs terminale Thiolgruppen besonders bevorzugt drei bis sechs terminale Hydroxylgruppen, drei bis sechs terminale Carboxylgruppen und/oder drei bis sechs terminale Thiolgruppen aufweist.

3. Verfahren gemäß Anspruch 1 oder 2, wobei die Komponente (X) eine oder mehrere Verbindung(en) ist und ausgewählt wird aus der Gruppe bestehend aus Ethylenglycol, Diethylenglycol, Polyethylenglycol, Methylpropylenglykol, Dipropylenglykol, Polypropylenglycol, 1,3-Butandiol, 1,4-Butandiol 1,1,1-Trimethylolpropan, Glycerin, Pentaerythritol, Sorbitol, Saccarose, Xylitol, 1,2-Propandiol, 1,3-Propandiol bevorzugt Polypropylenglycol, 1,1,1-Trimethylolpropan, Glycerin und Sorbitol.

4. Verfahren gemäß einem der Ansprüche 1 bis 3, wobei der Stoffmengenanteil der Komponente (X) von 0,5 mol-% bis 95 mol-% bevorzugt von 1 mol-% bis 90 mol-% und besonders bevorzugt von 10 mol-% bis 85 mol-% bezogen auf die Summe der Stoffmengen der polymeren Formaldehydverbindung und der Komponente (X) beträgt.

5. Verfahren gemäß einem der Ansprüche 1 bis 4 umfassend folgende Schritte:

(α) ein Suspensionsmittel, dass in einem Reaktor vorgelegt wird und
(γ) das Alkylenoxid während der Reaktion stufenweise oder kontinuierlich in den Reaktor zudosiert wird.

6. Verfahren gemäß Anspruch 5, wobei in Schritt (γ) die Komponente (X) kontinuierlich oder stufenweise bevorzugt kontinuierlich dosiert wird.

7. Verfahren gemäß Anspruch 5 oder 6, wobei in Schritt (γ) die polymere Formaldehydverbindung und das Alkylenoxid kontinuierlich oder stufenweise bevorzugt kontinuierlich dosiert werden.

8. Verfahren gemäß einem der Ansprüche 5 bis 7, wobei Schritt (γ) bei einer Temperatur von 20 °C bis 130 °C bevorzugt von 40 °C bis 120 °C und besonders bevorzugt von 60 °C bis 110 °C erfolgt.

9. Verfahren gemäß einem der Ansprüche 5 bis 8, wobei in Schritt (α) das Suspensionsmittel keine H-funktionellen Gruppen enthält.

10. Verfahren gemäß Anspruch 9, wobei in Schritt (α) das Suspensionsmittel, das keine H-funktionellen Gruppen enthält, gemeinsam mit DMC-Katalysator im Reaktor vorgelegt wird.

11. Verfahren gemäß Anspruch 10, wobei anschließend an Schritt (α)
(β) zu dem Gemisch aus Schritt (α) eine Teilmenge an Alkylenoxid bei einer Temperatur von 20 °C bis 120 °C bevorzugt von 35 °C bis 105 °C und besonders bevorzugt von 50 °C bis 90 °C zugegeben wird, und wobei dann die Zugabe der Alkylenoxidverbindung unterbrochen wird.

12. Verfahren gemäß einem der Ansprüche 1 bis 11, wobei das Alkylenoxid eine oder mehrere Verbindung(en) ist und ausgewählt wird aus der Gruppe bestehend aus Ethylenoxid, Propylenoxid, Styroloxid und Cyclohexenoxid bevorzugt Ethylenoxid und Propylenoxid und besonders bevorzugt Propylenoxid.

13. Polyoxymethylen-Polyoxyalkylen-Copolymer erhältlich nach einem Verfahren gemäß einem der Ansprüche 1 bis 12.

14. Polyoxymethylen-Polyalkylenoxid-Copolymer gemäß Anspruch 13 mit einem Oxymethylengruppen-Anteil von 1 Gew.-% bis 70 Gew.-% bevorzugt von 10 Gew.-% bis 50 Gew.-% und besonders bevorzugt von 20 Gew.-% bis 50 Gew.-% bezogen auf das Polyoxymethylen-Polyalkylenoxid-Copolymer Produkt und bestimmt mittels der im Experimentalteil beschriebenen $^1$H-NMR-Methode.

15. Verfahren zur Herstellung eines Polyurethan-Polymers, umfassend den Schritt der Reaktion einer Polyisocyanat-Komponente mit einer Polyolkomponente, **dadurch gekennzeichnet, dass** die Polyolkomponente ein Polyoxymethylen-Polyoxyalkylen-Copolymer gemäß Anspruch 13 oder 14 umfasst.

Europäisches Patentamt
European Patent Office
Office européen des brevets

# EUROPÄISCHER RECHERCHENBERICHT

Nummer der Anmeldung
EP 20 17 9673

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | WO 2015/155094 A1 (BAYER MATERIALSCIENCE AG [DE]) 15. Oktober 2015 (2015-10-15)<br>* Seite 1, Zeile 1 - Zeile 2; Beispiel 1 *<br>* Seite 2, Zeile 29 - Zeile 34 *<br>* Seite 6, Zeile 1 - Zeile 16 *<br>----- | 1-15 | INV.<br>C08G65/26<br>C08G18/56<br>C08G2/00 |

RECHERCHIERTE SACHGEBIETE (IPC)
C08G
C09J

Der vorliegende Recherchenbericht wurde für alle Patentansprüche erstellt

1

| Recherchenort | Abschlußdatum der Recherche | Prüfer |
|---|---|---|
| Den Haag | 6. Oktober 2020 | Adigbli, Francis |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 20 17 9673

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-10-2020

| Im Recherchenbericht angeführtes Patentdokument | Datum der Veröffentlichung | Mitglied(er) der Patentfamilie | Datum der Veröffentlichung |
|---|---|---|---|
| WO 2015155094 A1 | 15-10-2015 | CN 106414532 A | 15-02-2017 |
| | | EP 3129419 A1 | 15-02-2017 |
| | | ES 2702327 T3 | 28-02-2019 |
| | | JP 6518691 B2 | 22-05-2019 |
| | | JP 2017510686 A | 13-04-2017 |
| | | SG 11201608076R A | 29-11-2016 |
| | | US 2017096526 A1 | 06-04-2017 |
| | | US 2018371159 A1 | 27-12-2018 |
| | | WO 2015155094 A1 | 15-10-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2015155094 A1
- EP 2019081407 W
- WO 2020083814 A1
- WO 1981001712 A1
- US 3436375 A
- JP 03263454 B
- JP 2928823 B
- EP 1359177 A
- US 7304172 B2
- US 20120165549 A1
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- EP 18207740 A
- WO 0180994 A1


### In der Beschreibung aufgeführte Nicht-Patentliteratur


- **M. IONESCU.** Chemistry and Technology of Polyols for Polyurethanes. Rapra Techn. Ltd, 2016
- Polyoxymethylenes. **M. HAUBS.** Ullmann's Encyclopedia of Industrial Chemistry. 2012
- *Bull. Chem. Soc. J.,* 1994, vol. 67, 2560-2566
- **M. H. CHISHOLM et al.** *Macromolecules,* 2002, vol. 35, 6494
- **S. D. ALLEN.** *J. Am. Chem. Soc.,* 2002, vol. 124, 14284
- *Beispiel Chemical Communications,* 2011, vol. 47, 141-163